# FASCICULE DE BREVET EUROPEEN

(11) **EP 3 449 022 B1**
(45) Date de publication et mention de la délivrance du brevet: **15.06.2022**
(21) Numéro de dépôt: 17788850.0
(22) Date de dépôt: 19.01.2017
(51) Int. Cl.: C22C 9/01, B22D 27/02, B32B 15/01, C22C 1/02, B22D 7/00

(54) **COMPOSITE CU/AL OBTENU PAR SÉPARATION APRÈS FUSION ÉLECTROMAGNÉTIQUE HAUTE FRÉQUENCE**
DURCH TRENNUNG NACH HOCHFREQUENTEM ELEKTROMAGNETISCHEM SCHMELZEN GEWONNENER CU/AL-VERBUNDSTOFF
CU/AL COMPOSITE OBTAINED BY SEPARATION FOLLOWING HIGH-FREQUENCY ELECTROMAGNETIC MELTING

(30) Priorité: 24.04.2016 DZ 160191 P
(43) Date de publication de la demande: 06.03.2019
(73) Titulaire: Debili, Mohamed Yacine, Annaba (DZ)
(72) Inventeur: KEBBACHE, Ismahane, Drean 36000 (DZ); DEBILI, Mohamed Yacine, Drean 36000 (DZ)
(74) Mandataire: Viering, Jentschura & Partner mbB Patent- und Rechtsanwälte
(86) Numéro de dépôt international: PCT/DZ2017/050001
(87) Numéro de publication internationale: WO 2017/186252

(56) Documents cités:
- WO-A1-2013/011100
- CN-A- 1 311 069
- JP-A- 2004 034 084
- US-A1- 2016 060 730
- A. GUEYDAN, B. DOMENGÈS, E. HUG: "Study of the intermetallic growth in copper-clad aluminum wires after thermal aging", INTERMETALLICS, vol. 50, 12 mars 2014 (2014-03-12), XP002794075,

## Description

### 1.2 Domaine technique

Cette invention concerne l'élaboration d'un bimétal par synthèse après fusion sous induction haute fréquence de deux métaux Al et Cu qui se séparent a l'état liquide du fait de l'existence d'une lacune de miscibilité et se solidifient a la température ambiante en restant séparés par une interface. Nous avons observe pour la première fois une séparation du cuivre et de l'aluminium après fusion par induction haute fréquence (300KHZ) dans l'alliage Cu-14%pds Al. A partir de l'état totalement liquide (1100°C), la fusion a été effectuée dans un four sous induction a haute fréquence (HF), ayant une puissance de l'ordre de 6KW, a partir des éléments purs cuivre et aluminium avec une pureté très élevée Cu (99,99%) et Al (99,99%) que ce soit a l'état massif (copeaux) ou sous forme de poudres très fines compactée a froid. Le degré de surfusion mis en jeu, associé a la profondeur de pénétration du courant induit dans la matériau est suffisante pour provoquer la formation d'un matériau composite bimétallique avec une interface d'épaisseur 10µm.

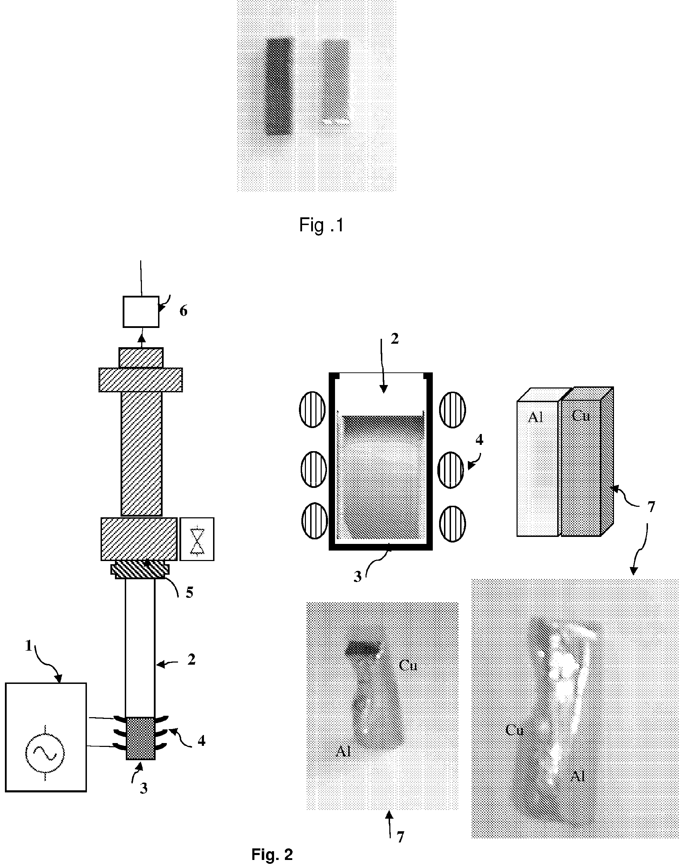

Pour cet alliage de teneur en aluminium de 14% en poids et pour la première fois, nous avons obtenus un alliage aux propriétés exceptionnelles (Figure 1), une séparation du cuivre et de l'aluminium a été obtenue par fusion sous induction électromagnétique haute fréquence et solidification jusqu'à la température ambiante (Figure 2).

Ce matériau posséde des propriétés physiques, physico-chimiques et mécaniques spéciales applicables en aéronautique (gain de poids) et pour plusieurs autres applications potentielles, citons en particulier: en électrotechnique (connecteurs électriques pour voitures) et plus spécialement en microélectronique dans les interconnexions des circuits intégrés: Matériau a conductivités électrique et thermique variables (pouvant être utilise comme thermostat ou capteur thermique en réfrigération). Ce matériau peut également servir comme électrode bimétallique pour les piles Lithium-ion utilisées dans les smartphones. Les électrodes Lithium-ion actuelles utilisent des électrodes bimétalliques ou le cuivre recouvre l'aluminium par assemblage mécanique par laminage ("Copper clad aluminium").

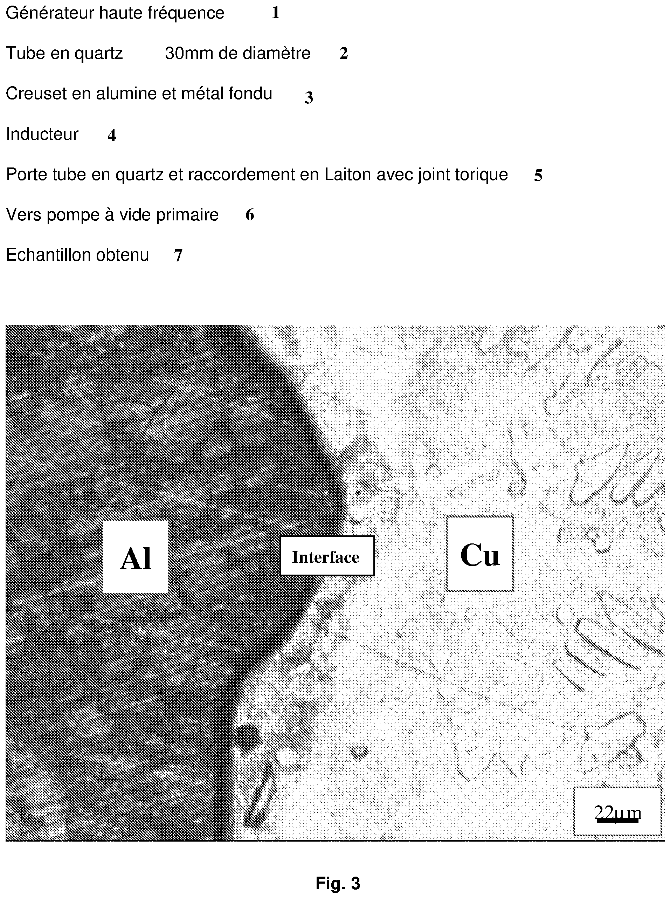

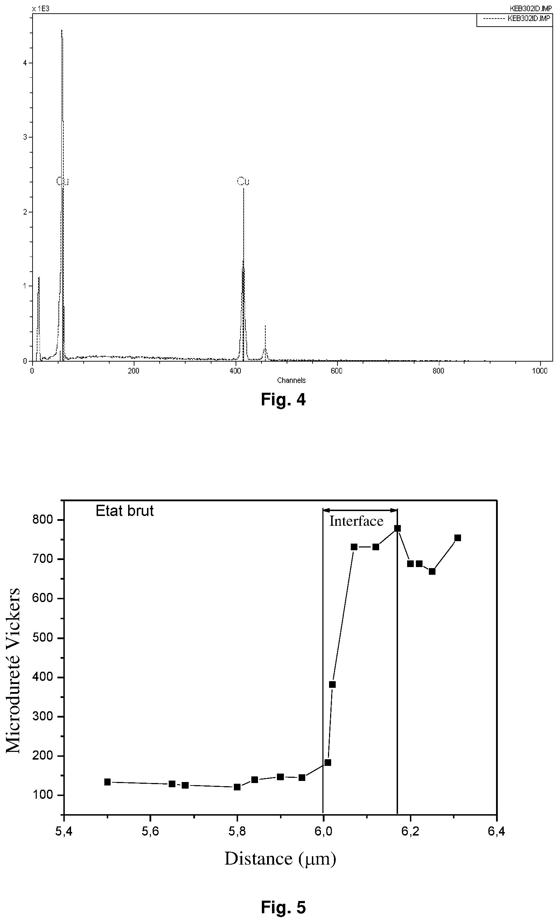

La mise en évidence d'une lacune de miscibilité inattendue et non prévue par le diagramme d'équilibre du système Al-Cu associée a une solidification hors équilibre de l'alliage sous l'effet de la force électromagnétique générée par les courants induits de Foucault est responsable de cette séparation particulière. (Figure 3) et (Figure 4). Une telle structure est obtenue pour la première fois dans un alliage Al-Cu.

### 1.3 Etat de la technique antérieure

La difficulté de fabrication d'un joint boulonné durable entre l'aluminium et le cuivre considérés comme métaux dissimi-laires, a conduit plusieurs efforts, ces 25 dernières années, à se focaliser sur la transition faite à partir d'une liaison de cuivre à l'aluminium.

Le soudage par friction est plus utilisé que le soudage a l'arc ou par faisceau laser, mais tous ces procédés possèdent certains inconvénients a savoir: Pression élevée et échauffements de l'interface lors de la friction pouvant également donner naissance à plusieurs phases indésirables pouvant fragiliser l'interface de soudure et conduire même à une dégradation physico-chimique du matériau. Le soudage par impulsion magnétique est le procédé d'assemblage à froid récemment découvert et n'utilisant pas le chauffage (30° maximum) mais provoque la déformation des deux métaux à joindre.

### 1.3.1 Brevets antérieurs

WO 2001004373 A1 Matériau composite cuivre-aluminium projete et procédé de fabrication associe.

EP 2919939 A1 Soudage hétérogène aluminium/cuivre.

WO 2007121622 A1 conduit composite Cu/Al et procédé de fabrication dudit conduit.

EP110524581 Méthode d'assemblage de métaux dissemblables-

WO 2013011100 A1 Procédé et dispositif de mise en contact sans mélange et a haute température de deux liquides non miscibles avec chauffage et brassage par induction.

L'invention sous le brevet WO 2013011100 A1 concerne un procédé et un dispositif pour mettre en contact des métaux et des sels fondus a des températures élevées pouvant atteindre par exemple jusqu'a environ 1100K. Les deux métaux sont places dans deux creusets séparés dont l'un contenant le liquide 1 est percé d'un orifice pour alimenter le deuxième creuset contenant le liquide 2, alors que dans le cas de notre invention les deux métaux sont places dans le même creuset et restent en contact même a l'état liquide.

US 2016/060730 A1 divulgue la fabrication des composites "bimétal" des alliages Al-Bi, Al-Pb, Al-tn ou encore Al-Si.

A. Guyedan, B. Domengès, E.Hug "Study of the intermetallic growth in copper-clad aluminum wires after thermal aging", Intermetallics, Vol. 50 (2014) divulgue la fabrication d'une composite de Cu-15%Al par brassages des tôles de Cu et de l'Al.

A notre connaissance et suite a la recherche d'antériorité effectuée, la mise en contact du cuivre et de l'aluminium a l'état liquide n'a pas été brevetée auparavant.

### 1.4 But de l'invention

La présente invention concerne un procédé de fabrication d'un composite bimétallique de cuivre et d'aluminium comprenant une interface Cu/14% Al (en poids) selon la revendication 1 et un composite bimétallique produit par ledit procédé.

De nombreux alliages à haute résistance (alliages d'aluminium, aciers, superalliages) sont sensibles à la fissuration a chaud durant le soudage. Ce phénomène, dû aux contraintes qui apparaissent durant les dernières étapes de la solidification, explique pourquoi les soudures d'aluminium sont encore peu utilisées, notamment en aéronautique. Une amélioration de la technique de soudage permettrait de produire des éléments de faible masse et de haute résistance, spécifiquement pour les équipements liés au domaine du transport aérien et terrestre. Actuellement, le soudage laser de composants est utilisé pour l'automobile et requiert l'ajout d'un alliage peu sensible à la fissuration a chaud dans le cordon de soudure, mais qui diminue les performances de l'assemblage.

Al et Cu sont connus pour être des métaux incompatibles parce qu'ils ont une grande affinité l'un pour l'autre pour des températures supérieures a 120°C et parce qu'ils présentent un grand écart de températures de fusion, peuvent donner naissance à des phases intermétalliques fragilisantes.

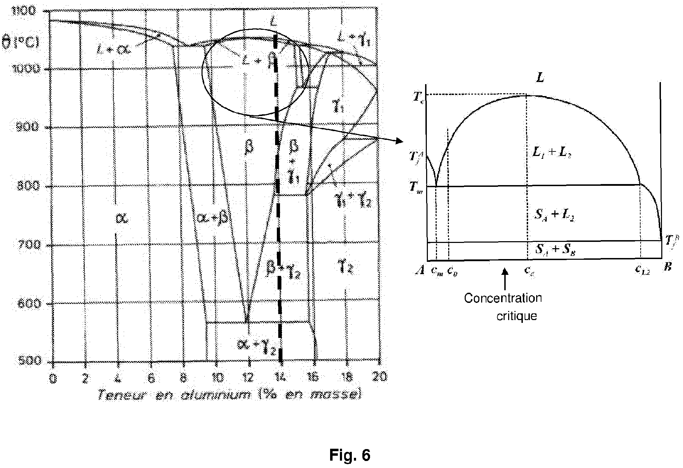

L'obtention d'un matériau composite formé des éléments purs Al et Cu séparés directement, lors de la solidification après fusion haute fréquence par séparation électromagnétique mettant en jeu des courants induits dans le bain liquide Figure 3, ces derniers vont créer une force électromagnétique dans le liquide qui va faire séparer le liquide le moins dense. Le bain liquide sera ainsi divisé en deux liquides non miscibles et par conséquent apparait une lacune de miscibilité à l'état liquide Figure 6 de l'alliage Cu-14%Al.

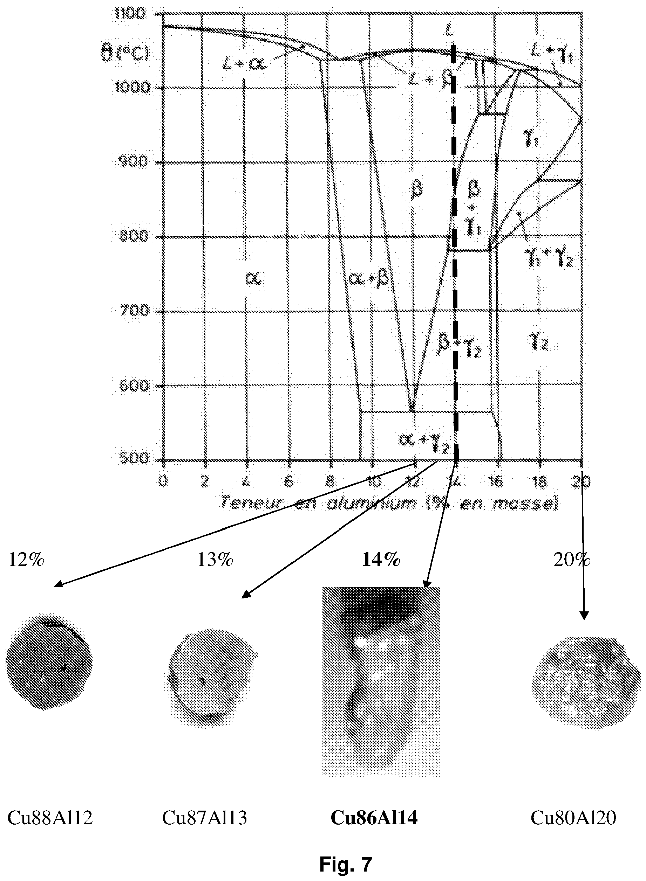

Après solidification jusqu'à la température ambiante on obtient un matériau composite bimétallique Figure 1, sans faire appel à un soudage de quelque nature que ce soit, ce qui permet de résoudre le problème du contact entre ces deux éléments. Les propriétés des éléments cuivre et aluminium restent conservés a température ambiante malgré le passage à haute température a l'état liquide. Notons, par ailleurs, que cette morphologie particulière ou en d'autres termes, ce comportement particulier du matériau objet de cette invention n'apparait que pour 14%m d'aluminium qu'on considère comme concentration critique (densité critique) en aluminium a laquelle correspond une force de Laplace électromagnétique maximale. Pour 12%, 13% et 20% on obtient des solutions solides classiques d'aluminium dans le cuivre (Figure 7).

### 1.5. Enoncé des figures

Figure 1 Eléments purs Al et Cu avant fusion.
Figure 2 Procédé de fusion haute fréquence et morphologie de l'échantillon obtenu.
Figure 3 Micrographie optique montrant la séparation soles deux métaux Al et Cu par une interface.
Figure 4 spectre d'analyse-X du coté du cuivre montrant uniquement les pics de cuivre.
Figure 5 Profil de microdureté Vickers réalisé entre l'aluminium et le cuivre via l'interface.
Figure 6 Diagramme de phases du système Cu-Al avec proposition de réaction monotectique à 14%Al.
Figure 7 Alliages Cu-Al avec des concentrations en aluminium différentes de 14% conduisant à un mélange sous forme de solution solide.

### 1.6. Présentation de la substance de l'invention

Alliage binaire Al-14%mCu.

### 1.6.1. Méthode de préparation

Alliage Al-14%mCu obtenu par **fusion** sous induction électromagnétique haute fréquence et solidification.

Deux morceaux de cuivre m_{Cu} = 8.3g et d'aluminium m_{Al} = 1.35g correspondant à une masse totale de 9.65g (Figure 1), sont placés dans un creuset en alumine. Le tout est placé dans un tube en quartz dans quel se fait un pompage primaire avant et pendant la fusion (Figure 2). Une fois la fusion atteinte pour les deux éléments, on laisse l'ensemble des deux liquides immiscibles pendant 15mn. La coupure de l'alimentation de l'inducteur en courant permet la solidification quasi-instantanée des deux liquides en deux phases solides séparées par une interface.

### 1.6.2. Intérêt de l'alliage obtenu

Cet alliage peut être élaboré selon la forme désirée: Tube creux (sans centrifugation), cylindre, plaquette, etc. et selon les dimensions désirées (Echelle industrielle) directement par fusion jusqu' à 1100°C sous induction magnétique haute fréquence sans avoir recours au laminage ou au revêtement «cladding» posséde les propriétés physiques de l'aluminium et du cuivre en même temps, a savoir: conductivité électrique et conductivité thermique variables en surface et en volume longitudinalement ou transversalement ce matériaux posséde également le même comportement électrochimique (résistance a la corrosion) du cuivre et de l'aluminium.

Nous avons mesuré le profil de la micro dureté Vickers point par point de l'aluminium vers le cuivre via l'interface. La figure 5 montre l'évolution de la micro dureté Vickers en fonction de la distance. La valeur de la micro dureté de l'aluminium est de l'ordre de 150vickers et passe brusquement à 750vickers du côté du cuivre.

## Revendications

1. Procédé pour la fabrication d'un composite bimétallique de cuivre et d'aluminium comprenant une interface d'un alliage binaire de Cu/14%Al (en poids), dans lequel le cuivre et l'aluminium sont fusionnés à l'état liquide à 1100°C sous induction électromagnétique avec une fréquence de 300 kHz et ensuite solidifiés à la température ambiante, permettant aux éléments cuivre et aluminium de se séparer en conservant ladite interface d'un alliage binaire.

2. Composite bimétallique de cuivre et d'aluminium comprenant une interface d'un alliage binaire de Cu/14%Al (en poids), obtenu par le procédé selon la revendication 1, comprenant la fusion de cuivre et d'aluminium à l'état liquide à 1100°C sous induction électromagnétique avec une fréquence de 300 kHz et ensuite solidification à la température ambiante, permettant aux éléments cuivre et aluminium de se séparer en conservant ladite interface d'un alliage binaire.

3. Composite bimétallique selon la revendication 2 dans lequel l'interface comporte une épaisseur de 10 µm.

4. Composite bimétallique selon la revendication 2 ou 3, sous forme d'un d'une tube creux, d'un cylindre ou d'une plaquette.

5. Utilisation d'un composite bimétallique selon l'une des revendications 2 à 4 pour les connecteurs électriques pour voitures, dans les interconnexions des circuits intégrés, comme thermostat ou capteur thermique en refrigeration ou comme électrode bimétallique pour les piles lithium-ion.

## Patentansprüche

1. Verfahren zum Herstellen eines
Bimetallverbundwerkstoffs aus Kupfer und Aluminium, der eine Grenzfläche aus einer binären Legierung von Cu/14%Al (nach Gewicht) aufweist, wobei das Kupfer und das Aluminium im flüssigen Zustand bei 1100°C unter elektromagnetischer Induktion mit einer Frequenz von 300 kHz geschmolzen und anschließend bei Umgebungstemperatur verfestigt werden, wobei den Elementen Kupfer und Aluminium ermöglicht wird, sich unter Beibehaltung der Grenzfläche aus einer binären Legierung zu trennen.

2. Bimetallverbundwerkstoff aus Kupfer und Aluminium, der eine Grenzfläche aus einer binären Legierung von Cu/14%Al (nach Gewicht) aufweist, der durch das Verfahren gemäß Anspruch 1 erhalten wird, aufweisend das Schmelzen von Kupfer und Aluminium im flüssigen Zustand bei 1100°C unter elektromagnetischer Induktion mit einer Frequenz von 300 kHz und das anschließende Verfestigen bei Raumtemperatur, wobei den Elementen Kupfer und Aluminium ermöglicht wird, sich unter Beibehaltung der Grenzfläche aus einer binären Legierung zu trennen.

3. Bimetallverbundwerkstoff gemäß Anspruch 2, wobei die Grenzfläche eine Dicke von 10 µm aufweist.

4. Bimetallverbundwerkstoff gemäß Anspruch 2 oder 3 in Form eines hohlen Rohrs, eines Zylinders oder eines Plättchens.

5. Verwendung eines Bimetallverbundwerkstoffs gemäß einem der Ansprüche 2 bis 4 für elektrische Steckverbinder für Personenkraftwagen in den Verbindungen von integrierten Schaltungen, als Thermostat oder Wärmesensor in der Kühlung oder als Bimetallelektrode für Lithium-Ionen-Batterien.

## Claims

1. A method for making a bimetallic composite of copper and aluminum comprising an interface of a binary alloy of Cu/14%Al (by weight), wherein the copper and aluminum are melted in a liquid state at 1100°C under electromagnetic induction with a frequency of 300 kHz and then solidified at room temperature, allowing the copper and aluminum elements to separate while maintaining said interface of a binary alloy.

2. A bimetallic composite of copper and aluminum comprising an interface of a binary alloy of Cu/14%Al (by weight), obtained by the method according to claim 1, comprising melting copper and aluminum in the liquid state at 1100°C under electromagnetic induction with a frequency of 300 kHz and then solidifying at room temperature, allowing the copper and aluminum elements to separate while maintaining said interface of a binary alloy.

3. The bimetallic composite according to claim 2, wherein the interface has a thickness of 10 µm.

4. The bimetallic composite according to claim 2 or 3, in the form of a hollow tube, a cylinder or wafer.

5. Use of a bimetallic composite according to any of claims 2 to 4 for electrical connectors for cars, in interconnections of integrated circuits, as a thermostat or thermal sensor in refrigeration, or as a bimetallic electrode for lithium-ion batteries.
